# EUROPEAN PATENT APPLICATION

(11) **EP 3 054 126 A1**
(43) Date of publication of application: **10.08.2016**
(21) Application number: 16154939.9
(22) Date of filing: 09.02.2016
(51) Int. Cl.: F02C 7/14, F28D 1/047, F02K 3/06, F02C 6/08, F01D 25/12, F02C 7/16

(54) **HEAT EXCHANGERS FOR THERMAL MANAGEMENT SYSTEMS**

(30) Priority: 09.02.2015 US 201514617803
(71) Applicant: United Technologies Corporation, Farmington, CT 06032 (US)
(72) Inventor: SUCIU, Gabriel L., Glastonbury, CT Connecticut 06033 (US); HILL, James D., Tolland, CT Connecticut 06084 (US); ACKERMAN, William K., East Hartford, CT Connecticut 06118 (US); CHANDLER, Jesse M., South Windsor, CT Connecticut 06074 (US)
(74) Representative: Hague, Alison Jane

(57) **Abstract**

A cooling system (100) for a gas turbine engine (10) includes a main fluid duct (106) with an inlet (112) and an outlet (110), a first heat exchanger (102), and a second heat exchanger (104). The first and second heat exchanger (102,104) are both in fluid communication with the main fluid duct (106) between the inlet (112) and the outlet (110) of the main fluid duct (106), and the second heat exchanger (104) is downstream of the first heat exchanger (102) for controlling heat transfer between compressor high-pressure bleed air traversing the first heat exchanger (102) and low-pressure ambient air traversing the second heat exchanger (104).

## Description

### BACKGROUND OF THE INVENTION

### 1. Field of the Invention

The present disclosure relates to gas turbine engines, and more particularly to thermal management systems for gas turbine engines.

### 2. Description of Related Art

Gas turbine engines commonly include components that generate heat, such as from friction between moving element, like gears and bearings, or from resistive heating, like generators and motor windings. Some gas turbine engines include thermal management systems for removing heat from such components and transferring the heat to the environment external to the engine. Such systems typically include a heat sink coupled to heat-generating component by a coolant circuit. In some systems, the coolant circuit circulates a coolant through the heat-generating component, provides heated coolant to the heat sink, and receives chilled coolant from the heat sink for return to the coolant circuit. The heat sink transfers heat from the coolant for dissipation into the external environment, usually through a chill plate with coolant conduits that are in direct fluid communication with the heat-generating component. The heat transfer capability of such devices is typically a function of the temperature differential between the coolant flow and airflow, respective mass flow rates of the coolant flow and airflow, and thermal stress levels imposed by the coolant flow and airflow.

Such conventional methods and systems for removing heat from gas turbine engine components have generally been considered satisfactory for their intended purpose. However, there is still a need in the art for improved heat exchangers for gas turbine engine thermal management systems. The present disclosure provides a solution for this need.

### SUMMARY OF THE INVENTION

In one aspect a cooling system for a gas turbine engine includes a main fluid duct with an inlet and an outlet, a first heat exchanger, and a second heat exchanger. The first and second heat exchanger are both in fluid communication with the main fluid duct between the inlet and the outlet of the main fluid duct, and the second heat exchanger is downstream of the first heat exchanger for controlling heat transfer between compressor high-pressure bleed air traversing the first heat exchanger and low-pressure ambient air traversing the second heat exchanger.

In an embodiment, the main fluid duct can configured to flow a thermally neutral heat transfer fluid from the first heat exchanger to the second heat exchanger.

In a further embodiment, the first heat exchanger can be in fluid communication with a compressor bleed air conduit.

In still another embodiment, the compressor bleed air conduit can be fluidly isolated from the main fluid duct.

In an embodiment, the compressor bleed air conduit can be configured to transfer heat from bleed air within the conduit into fluid traversing the main fluid duct.

In a further embodiment, the compressor bleed air conduit can include a serpentine segment encapsulated within the main fluid duct.

In yet another embodiment, the second heat exchanger can be in fluid communication with an ambient air channel.

It is also contemplated that, in accordance with certain embodiments, ambient air channel can be fluidly isolated from the main fluid duct.

Alternatively or additionally, the second heat exchanger includes a plate-fin body thermally coupling the main fluid duct with the ambient air channel.

In a further embodiment, the cooling system can include a re-circulating pump with inlet and outlet that are in fluid communication with an inlet and an outlet of the main fluid duct.

In still another embodiment, the re-circulating pump can include an impeller disposed between the pump inlet and outlet.

In an embodiment, the re-circulating pump can include a variable speed drive operably connected to the pump impeller.

Alternatively or additionally, the variable speed drive can include a mechanical drive element or an electrical drive element.

In another aspect a method of cooling compressor bleed air from a gas turbine engine compressor includes receiving a high-pressure compressor bleed airflow at a first heat exchanger, transferring heat from the high-pressure compressor bleed air into a fluid using the first heat exchanger, and flowing the fluid from the first heat exchanger to a second heat exchanger. The method also includes receiving an ambient airflow at the second heat exchanger and transferring heat from the fluid into the ambient airflow using the second heat exchanger such that the compressor bleed air flow is fluidly isolated from and in thermal communication with ambient airflow by a main fluid duct as described above.

In one embodiment a cooling system for a gas turbine engine is provided. The cooling system having a main fluid duct with an inlet and an outlet; a first heat exchanger in fluid communication with the main fluid duct; and a second heat exchanger in fluid communication with the main fluid duct, wherein the first heat exchanger and the second heat exchanger are both arranged between the inlet and outlet of the main fluid duct to control heat transfer between high-pressure compressor bleed air traversing the first heat exchanger and low-pressure ambient air traversing second heat exchanger.

In addition to one or more of the features described above, or as an alternative to any of the foregoing embodiments, the main fluid duct may be configured to flow a thermally neutral heat transfer fluid from the first heat exchanger to the second heat exchanger.

In addition to one or more of the features described above, or as an alternative to any of the foregoing embodiments, the first heat exchanger may be in fluid communication with a compressor bleed air conduit.

In addition to one or more of the features described above, or as an alternative to any of the foregoing embodiments, the compressor bleed air conduit may be fluidly isolated from the main fluid duct.

In addition to one or more of the features described above, or as an alternative to any of the foregoing embodiments, the compressor bleed air conduit may includes a serpentine segment encapsulated within the main fluid duct.

In addition to one or more of the features described above, or as an alternative to any of the foregoing embodiments, compressor bleed air conduit may be configured to transfer heat from bleed air within the conduit into fluid traversing the main fluid duct.

In addition to one or more of the features described above, or as an alternative to any of the foregoing embodiments, the second heat exchanger may be in fluid communication with an ambient air channel.

In addition to one or more of the features described above, or as an alternative to any of the foregoing embodiments, the ambient air channel may be fluidly isolated from the main fluid duct.

In addition to one or more of the features described above, or as an alternative to any of the foregoing embodiments, the second heat exchanger may include a plate-fin body thermally coupling the main fluid duct with the ambient air channel.

In addition to one or more of the features described above, or as an alternative to any of the foregoing embodiments, the cooling system may further include a re-circulating pump with an inlet and an outlet, wherein the re-circulating pump outlet is in fluid communication with the main fluid duct inlet, wherein the re-circulating pump inlet is in fluid communication with the main fluid duct outlet.

In addition to one or more of the features described above, or as an alternative to any of the foregoing embodiments, the re-circulating pump may include an impeller disposed between the pump inlet and outlet.

In addition to one or more of the features described above, or as an alternative to any of the foregoing embodiments, the re-circulating pump may include a variable speed drive operably connected to the pump impeller.

In addition to one or more of the features described above, or as an alternative to any of the foregoing embodiments, the variable speed drive may include a mechanical drive element.

In addition to one or more of the features described above, or as an alternative to any of the foregoing embodiments, the variable speed drive may include an electrical drive element.

In yet another embodiment a gas turbine engine is provided. The gas turbine engine having a compressor section; a cooling system, including: a main fluid duct with an inlet and an outlet; a first heat exchanger in fluid communication with the main fluid duct; and a second heat exchanger in fluid communication with the main fluid duct and the compressor section, wherein the first heat exchanger and the second heat exchanger are each disposed between the main fluid duct inlet and outlet; and a cooled engine component in fluid communication with the compressor section through the second heat exchanger.

In addition to one or more of the features described above, or as an alternative to any of the foregoing embodiments, the gas turbine engine may include a fan section with a fan duct coupled to the compressor section, wherein the fan duct is in fluid communication with the first heat exchanger.

In addition to one or more of the features described above, or as an alternative to any of the foregoing embodiments, the gas turbine engine may include a thermally neutral heat transfer fluid charge disposed within the main fluid duct.

In addition to one or more of the features described above, or as an alternative to any of the foregoing embodiments, the main fluid duct may comprise a closed fluid circuit.

In addition to one or more of the features described above, or as an alternative to any of the foregoing embodiments, the gas turbine engine may include: a re-circulating pump with an inlet and an outlet, wherein the outlet is in fluid communication with the main fluid duct inlet, wherein the inlet is in fluid communication with the main fluid duct outlet; an impeller disposed between the pump inlet and outlet; and a variable speed drive operably connected to the pump impeller.

In yet another embodiment a method of cooling compressor bleed air from a gas turbine engine compressor is provided. The method comprising receiving a high-pressure compressor bleed airflow at a first heat exchanger; transferring heat from the high-pressure compressor bleed air into a fluid using the first heat exchanger; flowing the fluid from the first heat exchanger to a second heat exchanger; receiving an ambient airflow at the second heat exchanger; and transferring heat from the fluid into the ambient airflow using the second heat exchanger, wherein the compressor bleed airflow is fluidly isolated from the ambient airflow by a main fluid duct fluidly coupling the first heat exchanger with the second heat exchanger.

These and other features of the systems and methods of the subject disclosure will become more readily apparent to those skilled in the art from the following detailed description of the preferred embodiments taken in conjunction with the drawings.

### BRIEF DESCRIPTION OF THE DRAWINGS

So that those skilled in the art to which the subject disclosure appertains will readily understand how to make and use the devices and methods of the subject disclosure without undue experimentation, embodiments thereof will be described in detail herein below with reference to certain figures, wherein:
Fig. 1 is a schematic cross-sectional side elevation view of an exemplary embodiment of a gas turbine engine constructed in accordance with the present disclosure, showing a cooling system;
Fig. 2 is a schematic view of the cooling system of Fig. 1, showing first and second heat exchangers fluidly coupled to one another by a main fluid duct; and
Fig. 3 is flow diagram of an exemplary method of removing heat from compressor discharge air in a gas turbine engine.

### DETAILED DESCRIPTION OF THE PREFERRED EMBODIMENTS

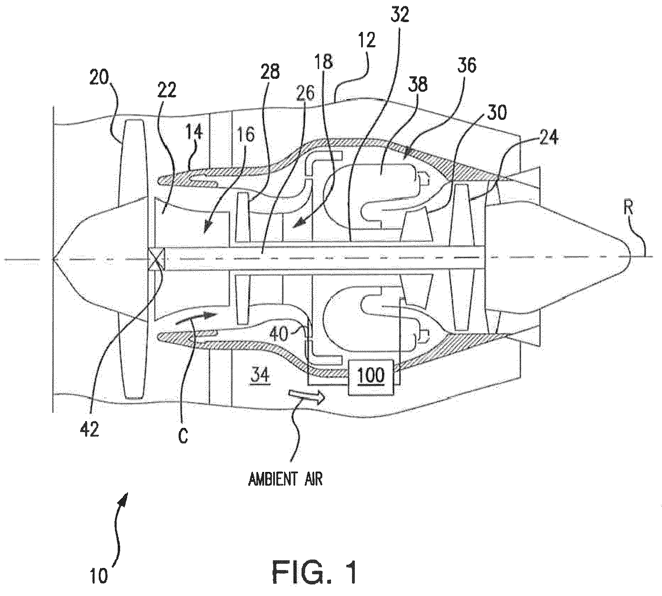

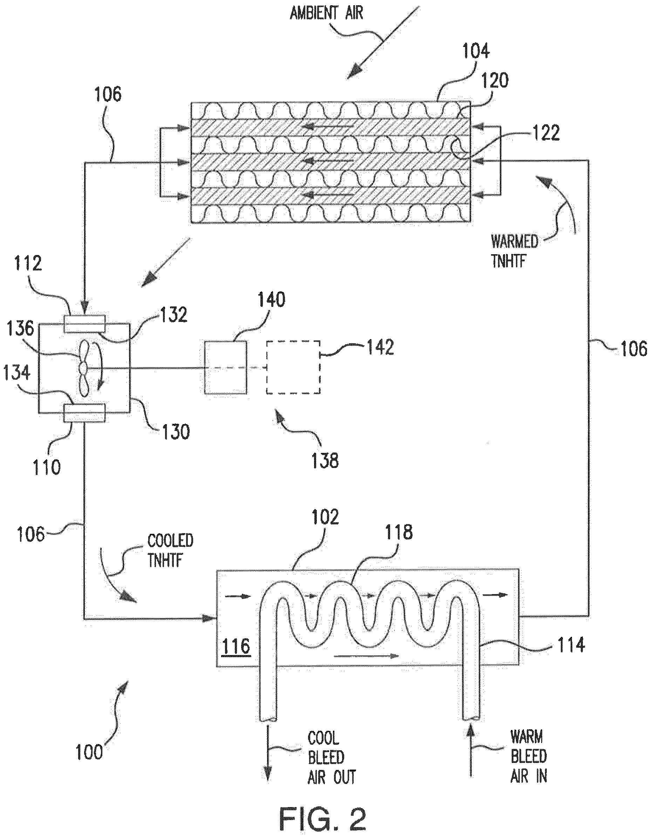

Reference will now be made to the drawings wherein like reference numerals identify similar structural features or aspects of the subject disclosure. For purposes of explanation and illustration, and not limitation, a partial view of an exemplary embodiment of a gas turbine engine in accordance with the present disclosure is shown in Fig. 1 and is designated generally by reference character 10. Other embodiments of thermal management systems in accordance with the disclosure, or aspects thereof, are provided in Figs. 2-3, as will be described. The systems and methods described herein can be used in aircraft main engines and/or auxiliary power units.

Gas turbine engine 10 includes a nacelle 12, a case 14, a low-pressure spool 16, and a high-pressure spool 18. Low-pressure spool 16 and high-pressure spool 18 are rotatably supported relative to nacelle 12 and case 14. Low-pressure spool 16 generally includes a fan assembly 20 coupled to a low-pressure compressor assembly 22 and a low-pressure turbine assembly 24 connected by a low-pressure shaft 26. High-pressure spool 18 generally includes high-pressure compressor assembly 28 and a high-pressure turbine assembly 30 connected by a high-pressure shaft 32. Case 14 generally surrounds the low-pressure spool 16 and high-pressure spool 18, and defines therebetween a core flow path C extending through gas turbine engine 10. Nacelle 12 defines a bypass duct 34 circumferentially surrounding fan assembly 20 and case 14.

A combustor section 36 including combustor 38 is arranged axially between high-pressure compressor assembly 28 and high-pressure turbine assembly 30, and fluidly couples high-pressure compressor assembly 28 and high-pressure turbine assembly 30 to form a portion of core flow path C. Combustor 38 receives a flow of fuel, mix the fuel with compressed fluid received from high-pressure compressor assembly 28, and ignites the mixture, and generates high-pressure combustion products. The high-pressure combustion products are communicated to high-pressure turbine assembly 30, which expands the high-pressure combustion products, extracts work therefrom to drive high-pressure compressor assembly 28 through high-pressure shaft 32. High-pressure turbine assembly 30 thereafter communicates the expanded combustion products to low-pressure turbine assembly 24, which further expands the combustion products, extracts additional work therefrom, and drives fan assembly 20 and low-pressure compressor assembly 22 via low-pressure shaft 26. Low-pressure turbine assembly 24 thereafter discharges the combustion products into the environment external to gas turbine engine 10.

As fan assembly 20 rotates within bypass duct 34 ambient air is driven through bypass duct 34. A portion of the ambient air traverses a cooling system 100 disposed within gas turbine engine 10 for removing heat from gas turbine engine 10. Non-limiting examples of heat sources thermally coupled to cooling system 100 include bearing systems rotatably supporting low-pressure spool 16 and/or high-pressure spool 18 and a gear architecture 42 rotatably coupling fan assembly 20 to low-pressure shaft 26.

With reference to Fig. 2, cooling system 100 is shown. Cooling system 100 includes a first heat exchanger 102, a second heat exchanger 104, a main fluid duct 106, and a re-circulation pump 130. First heat exchanger 102 is in fluid communication with second heat exchanger 104 through main fluid duct 106. Main fluid duct 106 includes an outlet 110 and an inlet 112, outlet 110 being disposed upstream of first heat exchanger 102 and inlet 112 being disposed downstream of second heat exchanger 104. First heat exchanger 102 and second heat exchanger 104 are both in fluid communication with main fluid duct 106 between outlet 110 and inlet 112 of main fluid duct 106 for controlling heat transfer between compressor high-pressure bleed air extracted from a gas turbine engine compressor assembly, e.g. low-pressure compressor assembly 22 (shown in Fig. 1) and/or high-pressure compressor assembly 28 (shown in Fig. 1), traversing first heat exchanger 102 and low-pressure ambient air traversing second heat exchanger 104, e.g. through bypass duct 34 (shown in Fig. 1). Main fluid duct 106 is a closed fluid circuit and contains a thermally neutral heat transfer fluid and is configured for flowing the fluid between first heat exchanger 102 and second heat exchanger 104. It is contemplated that the thermally neutral heat transfer fluid be a fluid that (a) not undergo a state change within a predetermined temperature range, and (b) remain chemically stable within the predetermined temperature range. Non-limiting examples of thermally neutral heat transfer fluids include THERMINOL^{®}, available from Solutia Inc. of St. Louis, Missouri, and DOWTHERM™, available from the Dow Chemical Company of Midland, Michigan.

First heat exchanger 102 is in main fluid duct 106. First heat exchanger 102 is also in fluid communication with a bleed air duct 40 (shown in Fig. 1), which in turn is in fluid communication with high-pressure compressor assembly 28 through a bleed air conduit 114. Bleed air conduit 114 is fluidly isolated from main fluid duct 106 and is thermally communicative therewith within an interior 116 of first heat exchanger 102. This allows high-pressure, high-temperature (relative to ambient) air to be cooled by transferring heat from the bleed airflow into thermally neutral heat transfer fluid traversing interior 116 of first heat exchanger 102, improving the suitability of the extracted bleed air for cooling gas turbine engine components requiring coolant. An example of such a cooled engine component is high-pressure turbine assembly 30 (shown in Fig. 1). First heat exchanger 102 can be a fin-type heat exchanger, a pin-type heat exchanger, or any other type of suitable heat exchanger as suitable for a given application.

A segment 118 of bleed air conduit 114 is encapsulated within interior 116 of first heat exchanger 102. Segment 118 defines a tortuous bleed air path within main fluid duct 106, and as illustrated in Fig. 2 defines a serpentine flow path through interior 116. Segment 118 may define a flow path that is generally opposed to flow through main fluid duct 106, e.g. in a cross-flow arrangement. Either or both of these features potentially improve the controllability of heat transfer between the bleed airflow and the thermally neutral heat transfer fluid. As will be appreciated, cooling high-temperature, high-pressure bleed air reduces the volume of coolant required to cool engine components, thereby correspondingly improving engine efficiency.

Second heat exchanger 104 is in main fluid duct 106. Second heat exchanger 104 is also in fluid communication with ambient air channel, e.g. bypass duct 34 (shown in Fig. 1), for transferring heat from fluid traversing main fluid duct 106 and into ambient air traversing the ambient air channel. In the illustrated exemplary embodiment, second heat exchanger 104 includes a plate-fin body 120 that thermally couples the ambient air channel with main fluid duct 106 through fins 122 that extend into the ambient air channel. It is to be understood and appreciated that pin-type heat exchangers or any other type of suitable heat exchanger can be used, as suitable for a given application.

Re-circulating pump 130 is in fluid coupled to main fluid duct 106 and includes a pump inlet 132, a pump outlet 134, and an impeller 136. Pump inlet 132 is in fluid communication with main fluid duct inlet 112. Pump outlet 134 is in fluid communication with main fluid duct outlet 110. Impeller 136 is disposed between pump inlet 132 and pump outlet 134, and operable to provide motive force for purposes of driving thermally neutral heat transfer fluid through main fluid duct 106.

A variable speed drive 138 is operably connected to impeller 136. Variable speed drive 138 includes a mechanical drive assembly 140, such as gear connected to a drive train. Alternatively, variable speed drive 138 may include an electrical drive assembly 142, such as a variable speed motor. This allows for controlling impeller 136 such that the mass flow rate of fluid flowing through main fluid duct 106 changes in a way that corresponds to heat transfer needs of a given engine operating regime.

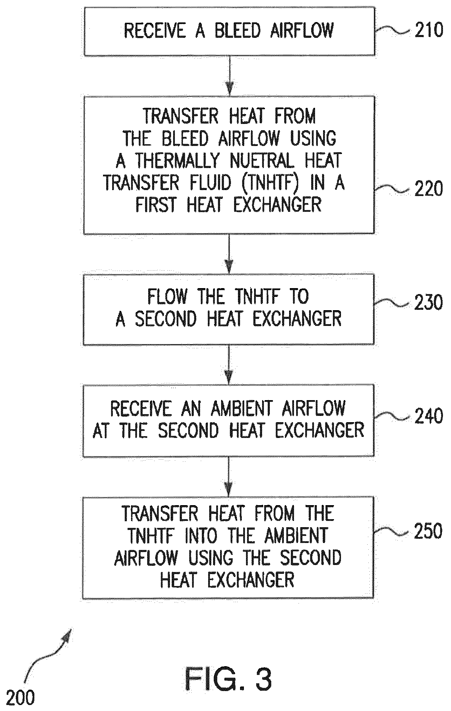

With reference to Fig. 3, a method 200 of cooling compressor bleed air from a gas turbine engine compressor is shown. Method 200 includes receiving a high-pressure compressor bleed airflow at a first heat exchanger, e.g. first heat exchanger 102, shown with box 210. Method 200 also includes transferring heat from the high-pressure compressor bleed air into a thermally neutral heat transfer fluid using the first heat exchanger, shown with box 220. Method 200 further includes flowing the thermally neutral heat transfer fluid from the first heat exchanger to a second heat exchanger, e.g. second heat exchanger 104, shown with a box 230. The fluid can be flowed in a closed fluid circuit, e.g. main fluid duct 106, and modulating the fluid mass flow can include modulating the fluid mass flow in correspondence with the operating regime of a gas turbine engine, e.g. gas turbine engine 10.

Method 200 additionally includes receiving an ambient airflow at the second heat exchanger, shown with box 240, and transferring heat from the fluid into the ambient airflow using the second heat exchanger such that the compressor bleed air flow is fluidly isolated from and in thermal communication with ambient airflow by a main fluid duct as described above, as shown with box 250.

Some conventional gas turbine engines use a single configuration heat exchanger that has a single hot side and a single cold side for cooling high-pressure, high temperature gas with low-pressure, low temperature gas. Such air-to-air heat exchangers are generally suitable for their intended purpose.

In embodiments described herein, a thermally neutral heat transfer fluid is used to collect heat from hot, high-pressure fluid and transfer it to a lower pressure coolant stream. A cooling system contains the hot stream within a first heat exchanger in a tube (or tubes) that extend through the thermally neutral heat transfer fluid. The thermally neutral heat transfer fluid heats up and circulates to a second heat exchanger where the structure of the second heat exchanger cools the thermally neutral heat transfer fluid using a cold stream. The thermally neutral heat transfer fluid thereafter collects in a reservoir for recirculation within the system. This allows for balancing heat transfer using a re-circulation pump, which can control and regulate the mass flow rate (and heat transfer rate) between hot and cold streams.

In certain embodiments, coolant systems described herein provide a high degree of cooling with limited plumbing and/or with relatively little thermal stress. They can also allow the cooling system to run at a relatively low temperature because the hot flow is immersed within the thermally neutral heat transfer fluid flow within the first heat exchanger.

The methods and systems of the present disclosure, as described above and shown in the drawings, provide for gas turbine engines with superior properties including improved efficiency. While the apparatus and methods of the subject disclosure have been shown and described with reference to preferred embodiments, those skilled in the art will readily appreciate that changes and/or modifications may be made thereto without departing from the scope of the subject disclosure.

The following clauses set out features of the invention which may or may not presently be claimed in this application, but which may form the basis for future amendment or a divisional application.
1. A cooling system for a gas turbine engine, comprising: a main fluid duct with an inlet and an outlet; a first heat exchanger in fluid communication with the main fluid duct; and a second heat exchanger in fluid communication with the main fluid duct, wherein the first heat exchanger and the second heat exchanger are both arranged between the inlet and outlet of the main fluid duct to control heat transfer between high-pressure compressor bleed air traversing the first heat exchanger and low-pressure ambient air traversing second heat exchanger.
2. A cooling system as recited in clause 1, wherein the main fluid duct is configured to flow a thermally neutral heat transfer fluid from the first heat exchanger to the second heat exchanger.
3. A cooling system as recited in clause 1, wherein the first heat exchanger is in fluid communication with a compressor bleed air conduit.
4. A cooling system as recited in clause 3, wherein the compressor bleed air conduit is fluidly isolated from the main fluid duct.
5. A cooling system as recited in clause 3, wherein the compressor bleed air conduit includes a serpentine segment encapsulated within the main fluid duct.
6. A cooling system as recited in clause 3, wherein compressor bleed air conduit is configured to transfer heat from bleed air within the conduit into fluid traversing the main fluid duct.
7. A cooling system as recited in clause 1, wherein the second heat exchanger is in fluid communication with an ambient air channel.
8. A cooling system as recited in clause 7, wherein the ambient air channel is fluidly isolated from the main fluid duct.
9. A cooling system as recited in clause 7, wherein the second heat exchanger includes a plate-fin body thermally coupling the main fluid duct with the ambient air channel.
10. A cooling system as recited in clause 1, further including a re-circulating pump with an inlet and an outlet, wherein the re-circulating pump outlet is in fluid communication with the main fluid duct inlet, wherein the re-circulating pump inlet is in fluid communication with the main fluid duct outlet.
11. A cooling system as recited in clause 10, wherein the re-circulating pump further includes an impeller disposed between the pump inlet and outlet.
12. A cooling system as recited in clause 11, wherein the re-circulating pump further includes a variable speed drive operably connected to the pump impeller.
13. A cooling system as recited in clause 12, wherein the variable speed drive includes a mechanical drive element.
14. A cooling system as recited in clause 12, wherein the variable speed drive includes an electrical drive element.
15. A gas turbine engine, comprising: a compressor section; a cooling system, including: a main fluid duct with an inlet and an outlet; a first heat exchanger in fluid communication with the main fluid duct; and a second heat exchanger in fluid communication with the main fluid duct and the compressor section, wherein the first heat exchanger and the second heat exchanger are each disposed between the main fluid duct inlet and outlet; and a cooled engine component in fluid communication with the compressor section through the second heat exchanger.
16. A gas turbine engine as recited in clause 15, further including a fan section with a fan duct coupled to the compressor section, wherein the fan duct is in fluid communication with the first heat exchanger.
17. A gas turbine engine as recited in clause 15, further including a thermally neutral heat transfer fluid charge disposed within the main fluid duct.
18. A gas turbine engine as recited in clause 15, wherein the main fluid duct comprises a closed fluid circuit.
19. A gas turbine engine as recited in clause 15, further including:
   a re-circulating pump with an inlet and an outlet, wherein the outlet is in fluid communication with the main fluid duct inlet, wherein the inlet is in fluid communication with the main fluid duct outlet; an impeller disposed between the pump inlet and outlet; and a variable speed drive operably connected to the pump impeller.
20. A method of cooling compressor bleed air from a gas turbine engine compressor, the method comprising: receiving a high-pressure compressor bleed airflow at a first heat exchanger; transferring heat from the high-pressure compressor bleed air into a fluid using the first heat exchanger; flowing the fluid from the first heat exchanger to a second heat exchanger; receiving an ambient airflow at the second heat exchanger; and transferring heat from the fluid into the ambient airflow using the second heat exchanger, wherein the compressor bleed airflow is fluidly isolated from the ambient airflow by a main fluid duct fluidly coupling the first heat exchanger with the second heat exchanger.

## Claims

1. A cooling system (100) for a gas turbine engine (10), comprising:
a main fluid duct (106) with an inlet (112) and an outlet (110);
a first heat exchanger (102) in fluid communication with the main fluid duct (106); and
a second heat exchanger (104) in fluid communication with the main fluid duct (106), wherein the first heat exchanger (102) and the second heat exchanger (104) are both arranged between the inlet (112) and outlet (110) of the main fluid duct (106) to control heat transfer between high-pressure compressor bleed air traversing the first heat exchanger (102) and low-pressure ambient air traversing second heat exchanger (104).

2. A cooling system (100) as recited in claim 1, wherein the main fluid duct (106) is configured to flow a thermally neutral heat transfer fluid from the first heat exchanger (102) to the second heat exchanger (104).

3. A cooling system (100) as recited in claim 1 or 2, wherein the first heat exchanger (102) is in fluid communication with a compressor bleed air conduit (114).

4. A cooling system (100) as recited in claim 3, wherein the compressor bleed air conduit (114) is fluidly isolated from the main fluid duct (106); and/or wherein the compressor bleed air conduit (114) includes a serpentine segment (118) encapsulated within the main fluid duct (106); and/or wherein compressor bleed air conduit (114) is configured to transfer heat from bleed air within the conduit (114) into fluid traversing the main fluid duct (106).

5. A cooling system (100) as recited in any preceding claim, wherein the second heat exchanger (104) is in fluid communication with an ambient air channel (34).

6. A cooling system (100) as recited in claim 5, wherein the ambient air channel (34) is fluidly isolated from the main fluid duct (106); and/or wherein the second heat exchanger (104) includes a plate-fin body (120) thermally coupling the main fluid duct (106) with the ambient air channel (34).

7. A cooling system (100) as recited in any preceding claim, further including a re-circulating pump (130) with an inlet (132) and an outlet (134), wherein the re-circulating pump outlet (134) is in fluid communication with the main fluid duct inlet (112), wherein the re-circulating pump inlet (132) is in fluid communication with the main fluid duct outlet (110).

8. A cooling system (100) as recited in claim 7, wherein the re-circulating pump (130) further includes an impeller (136) disposed between the pump inlet (132) and outlet (134).

9. A cooling system (100) as recited in claim 8, wherein the re-circulating pump (130) further includes a variable speed drive (138) operably connected to the pump impeller (136); and optionally, wherein the variable speed drive (138) includes a mechanical drive element (140), or the variable speed drive (138) includes an electrical drive element (142).

10. A gas turbine engine (10), comprising:
a compressor section;
a cooling system (100), including:
a main fluid duct (106) with an inlet (112) and an outlet (110);
a first heat exchanger (102) in fluid communication with the main fluid duct (106); and
a second heat exchanger (104) in fluid communication with the main fluid duct (106) and the compressor section, wherein the first heat exchanger (102) and the second heat exchanger (104) are each disposed between the main fluid duct inlet (112) and outlet (110); and
a cooled engine component in fluid communication with the compressor section through the second heat exchanger (104).

11. A gas turbine engine (10) as recited in claim 10, further including a fan section (20) with a fan duct coupled to the compressor section, wherein the fan duct is in fluid communication with the first heat exchanger (102).

12. A gas turbine engine (10) as recited in claim 10 or 11, further including a thermally neutral heat transfer fluid charge disposed within the main fluid duct (106).

13. A gas turbine engine (10) as recited in claim 10, 11 or 12, wherein the main fluid duct (106) comprises a closed fluid circuit.

14. A gas turbine engine (10) as recited in any of claims 10 to 13, further including:
a re-circulating pump (130) with an inlet (132) and an outlet (134), wherein the outlet (134) is in fluid communication with the main fluid duct inlet, wherein the inlet (132) is in fluid communication with the main fluid duct outlet;
an impeller (136) disposed between the pump inlet (132) and outlet (134); and
a variable speed drive (138) operably connected to the pump impeller (136).

15. A method (200) of cooling compressor bleed air from a gas turbine engine compressor, the method comprising:
receiving (210) a high-pressure compressor bleed airflow at a first heat exchanger (102);
transferring (220) heat from the high-pressure compressor bleed air into a fluid using the first heat exchanger (102);
flowing (230) the fluid from the first heat exchanger (102) to a second heat exchanger (104);
receiving (240) an ambient airflow at the second heat exchanger (104); and
transferring (250) heat from the fluid into the ambient airflow using the second heat exchanger (104), wherein the compressor bleed airflow is fluidly isolated from the ambient airflow by a main fluid duct (106) fluidly coupling the first heat exchanger (102) with the second heat exchanger (104)
